# EUROPEAN PATENT SPECIFICATION

(11) **EP 0 946 381 B1**
(45) Date of publication and mention of the grant of the patent: **07.05.2003**
(21) Application number: 97946216.5
(22) Date of filing: 25.11.1997
(51) Int. Cl.: B60R 22/48, B60R 21/16, B60R 22/46

(54) **DEVICE AND METHOD FOR SAFETY BELTS**
VERFAHREN UND VORRICHTUNG FUR SICHERHEITSGURTE
PROCEDE ET DISPOSITIF DESTINES A DES CEINTURES DE SECURITE

(30) Priority: 30.12.1996 SE 9604846
(43) Date of publication of application: 06.10.1999
(73) Proprietor: Volvo Personvagnar AB, 405 08 Göteborg (SE)
(72) Inventor: KIHLBERG, Mats, S-421 36 Västra Frölunda (SE); BÖRJESSON, Bengt, S-423 38 Torslanda (SE)
(74) Representative: Andersson, Per Rune
(86) International application number: SE9701975
(87) International publication number: WO98029283

(56) References cited:
- EP-A- 0 318 031
- DE-A- 4 032 757
- DE-U- 29 613 291
- GB-A- 2 228 183

## Description

### TECHNICAL FIELD OF THE INVENTION:

The present invention relates to a device for a safety belt, according to the preamble of appended claim 1. In particular, the invention is intended to be applied in vehicles, for detecting whether somebody travelling in the vehicle is using a safety belt. The invention also relates to a method for said detection, according to the preamble of appended claim 1.

### BACKGROUND OF THE INVENTION:

In connection with motor vehicles, for example passenger cars, safety belts are normally used for those travelling in the front and rear seats of the vehicle. In a known manner, the use of safety belts provides an increased degree of protection for those in the vehicle in case of a collision.

Furthermore, there is, for different reasons, a need to detect whether a person in the car is using a safety belt and has fastened it. For example, such a detection can be utilized in order to activate some kind of indicator, for example a blinking warning light, as a reminder that the safety belt must be fastened if this has not yet been done. This detection can also be utilized if somebody in the front seat needs to check whether passengers in the rear seat really have fastened their safety belts.

Another situation in which the above-mentioned detection is desirable is in connection with the activation of an airbag for protecting people in the vehicle. In such contexts, it is desirable to control the activation and inflation of the airbag according to predetermined sequences, depending on whether those in the vehicle are using their safety belts or not.

According to previously known technology, devices are known which are adapted to detect whether a safety belt is locked, i.e. for detecting whether the locking tongue of the safety belt has been inserted in a corresponding belt lock. The belt lock is normally fixedly arranged in the floor of the vehicle or in a seat. According to previously known technology, a microswitch is normally used, which is arranged in the belt lock of the safety belt, and which is connected to an indicator which can, for example, be a blinking warning light. At other points in the vehicle than the drivers seat, such a system normally also comprises a sensor for detecting whether there is somebody sitting in the seat at which the seat belt in question is arranged. If the locking tongue of the safety belt in question is fixed in a belt lock, this will affect the microswitch. In this way the system can detect whether a person sitting in the seat in question is using the safety belt, with the indicator being activated if this is not the case.

A significant drawback of the above-mentioned known system which is based on the microswitch technology is due to the fact that this technology utilizes moving parts. Thus, such a microswitch can easily be exposed to wear, which in turn causes reduced reliability and reduced function. A microswitch is, additionally, very sensitive to pollutants in the form of dirt, road salt, beverages and other objects and substances which can enter into the belt lock, and bring about a reduced function.

The drawback of the microswitch technology can also be utilized by persons who for different reasons want to avoid using the safety belt without having a warning lamp or the like being lit. For this purpose, it is possible to insert a suitably shaped object into the belt lock, so that the microswitch is put into a position which corresponds to the locking tongue being locked. In this way, the system can be deceived into believing that the safety.belt is in use.

The same effect can also be achieved if, for example, the safety belt of the right front seat is locked in the belt lock which is intended for the left front seat, i.e. if a certain locking tongue is locked into the "wrong" belt lock. The system can of course also be deceived if a loose extra locking tongue is inserted into the belt lock, in which case the loose locking tongue then functions as a dummy, by means of which the function of an indicator (for example in the form of a warning lamp) can be switched off.

Another kind of transducer which can be used for the above-mentioned detection is a Hall-effect transducer, i.e. a transducer which is based on the Hall-effect, which as such is a known phenomenon, which means that an electric voltage can be generated in the presence of a magnetic field. The Hall-effect can be utilized for contactless detection as to whether the locking tongue of a safety belt is locked into a belt lock.

Although detectors based on the Hall-effect permit contactless detection with a good function, they have a drawback in that they are sensitive to interference from permanent magnets and radio transmitters. Additionally, detectors based on the Hall-effect can also in certain cases be deceived by means of some other object, for example a loose locking tongue which is inserted in the belt lock.

The document DE-U-29 613 291 Preamble of claim 1 resp. claim 8 discloses a seat belt in which a transponder is arranged in a locking device for detecting whether or not a seat belt has been fixed.

### SUMMARY OF THE INVENTION:

The object of the present invention is to provide an improved device for reliable detection of whether a person in a vehicle is using a safety belt, by means of which the above-mentioned drawbacks can be eliminated. This object is achieved by means of a locking device, the characteristics of which will become apparent from appended claim 1. The object is also achieved by means of a method, the characteristics of which will become apparent from appended claim 8.

The invention is, in particular, intended for safety belts for vehicle seats, and comprises a first locking organ arranged at the seat belt, and means for detecting whether the first locking organ is locked into a second locking organ, which in turn is arranged for detachable locking of the first locking organ. The invention is based on said means comprising transmitting organs for the transmitting of a signal, a transponder arranged for the reception of said signal, and the transmission of an answering signal comprising information which identifies said first locking organ, and receiving organs for the reception of said answer signal. Said transponder is arranged in said first locking organ, and said transmitting or receiving organs are arranged in said second locking organ, or vice versa. Additionally, said means are arranged to determine whether the first locking organ is locked into a predetermined second locking organ which corresponds to the first locking organ. In this way, an improved detection as to whether the seat belt is used in a correct manner is provided.

In a preferred embodiment of the invention, a transponder is utilized which is built into the locking tongue, and which interacts with a combined transmitting/receiving unit in the belt lock, and which transmits a signal which activates the transponder to emit a certain code. This code is then compared in a control unit with an expected code which defines the correct belt lock corresponding to the locking tongue.

The invention permits contactless detection, which in turn provides reliable detection which is not affected by, for example, objects being inserted into the belt lock.

According to a further embodiment, the invention is utilized for the control of at least one protective device, for example an airbag or a belt tightener. In this manner, the invention can be utilised to control, for example, the energy absorption of the airbag depending on whether a person in the vehicle is strapped down by a safety belt during a possible collision.

Further advantageous embodiments of the invention will become apparent from the appended dependent claims.

### BRIEF DESCRIPTION OF THE DRAWINGS:

The invention will in the following be described in more detail with reference to an example of a preferred embodiment and the appended drawings, in which:
- Fig. 1: is a schematic view of a device according to the present invention, and
- Fig. 2: is a block diagram which shows a system for detection of whether a person in a vehicle is using a safety belt.

### PREFERRED EMBODIMENT:

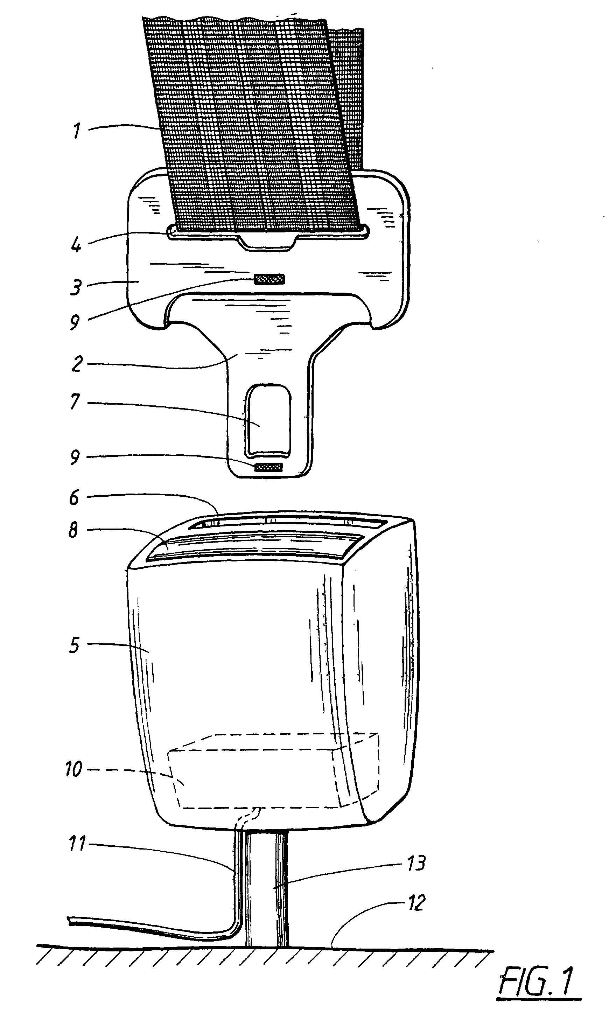

The invention is in particular intended to be used in connection with vehicles, for detecting whether a person in the vehicle is using a safety belt arranged in the vehicle. Fig. 1 shows, in principle, a part of a belt band 1 of such a safety belt. At the belt band 1, there is arranged a first locking organ in the form of a locking tongue 2, which is connected to a corresponding handle part 3. The belt band 1 is arranged in such a manner that the belt band 1 runs through an opening 4 in the handle part 3. The locking tongue 2 is preferably made of metal, while the handle part 3 preferably is of a plastic material.

When the safety belt is to be locked, the locking tongue 2 is inserted into a second locking organ in the form of a belt lock 5, which for this purpose comprises an opening 6 with an extension in the longitudinal extension of the belt lock 5. The locking of the locking tongue 2 in the belt lock 5 is as such previously known, and will therefore not be described in detail here, but is based on a (not shown) locking element with a catch being arranged inside of the belt lock 5. The catch is moved through an opening 7 in the locking tongue 2 when this has been inserted into the opening 6 of the belt lock 5. Furthermore, the locking tongue 2, in a known manner, can be detached from the belt lock 5 using a detaching button 8 provided for this purpose.

According to the invention, the locking tongue 2 supports at least one transponder 9 which is an information bearing electronic circuit, which as such is previously known. The transponder 9 is shaped and arranged so that it, when activated via a radio signal can emit a certain answering signal. This answering signal comprises predetermined information which is stored in a memory part of the transponder 9. According to the invention, this information is in the form of identity information in the form of a certain predetermined code which corresponds to the identity of a certain safety belt, i.e. in this case the safety belt, the belt band 1 of which is connected to the locking tongue 2 in question.

The transponder 9 is preferably passive, i.e. it is not provided with any current feed, but is instead activated by a signal emitted from a combined transmission and reception unit 10 which is arranged in the belt lock 5. The transmission and reception unit 10 comprises a (not shown) antenna in the shape of a coil, which is arranged to, when activated, emit a radio-frequent signal which is inductively coupled to the transponder 9, if this is in the vicinity of the antenna. The inductive coupling means that energy is supplied to the transponder 9, which in turn functions as a transmitter which can transmit the above-mentioned answering signal which comprises identity information. This signal is subsequently received by the transmission and reception unit 10.

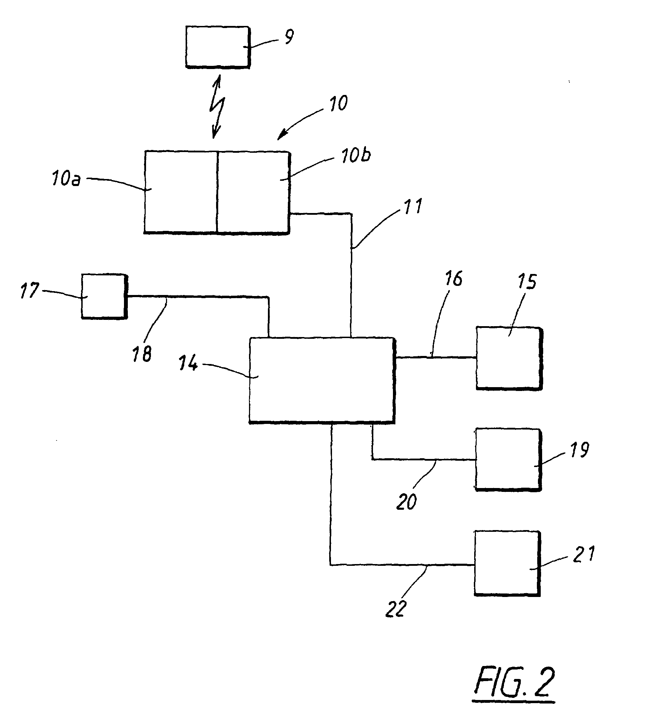

The transmission and reception unit 10 is connected via an electrical connection 11 to a (not shown) current feeding circuit, and also to a control unit which cannot be seen from Fig. 1, but which will be described below in connection to Fig. 2.

Furthermore, the belt lock 5 is, in a known manner, arranged in a fixed point in the vehicle, for example in its floor 12, or in an attachment point in a seat via an attachment organ 13 in the form of a wire or a bar.

Fig. 1 shows two alternative positions for the transponder 9. Thus, the transponder 9 can be moulded into the handle part 3, or be arranged in the locking tongue itself, for example in a suitable cavity in the locking tongue 2. Furthermore, the dimensions of the transponder 2 are typically a few millimetres in width and length. The positioning of the transponder 9 in the locking tongue 2 or in the corresponding handle part 4 depend on, among other things, the sensitivity of the transmitting and receiving unit 10. The closer to the transponder 9 the transmitting and receiving unit 10 is arranged, the weaker the sender which is needed to activate the transponder 9.

The function of the invention will now be explained with reference to Fig. 2 which is a block diagram of a system which comprises a transponder 9 of the kind which has been described above. Although only one transponder 9 is shown in Fig. 2, the system according to the invention can comprise additional transponders arranged at each safety belt in a vehicle. As has been described above, the transponder 9 interacts with the transmitting and receiving unit 10, which in turn is divided into a transmitting unit 10a and a receiving unit 10b.

At predetermined intervals, for example once per second, the transmitting unit 10a emits a radio-frequent signal via its antenna. If a transponder 9 is sufficiently close to the belt lock (which corresponds to the person having entered and locked the locking tongue in the belt lock 5) it will be activated and emit an answering signal which contains the identity code which is stored in the transponder 9. The code is so chosen that it directly defines the safety belt in which the transponder 9 is utilized.

The answering signal which is emitted from the transponder 9, and which contains said identity code will be detected by the receiving unit 10b. Information which corresponds to the identity code will furthermore be fed to a control unit 14, which is electrically connected to the transmitting and receiving unit 10 via a connection 11. The control unit 14 is preferably an existing computer-based unit in the vehicle which is normally used to control various functions in the vehicle, for example its climate system. The control unit 14 is, according to the invention, arranged to receive information relating to the identity code of the transponder 9, and to check whether this identity code corresponds to a certain expected code, which in turn corresponds to the locking tongue 2 in question being fastened in the correct belt lock 5. If the received identity code is the code which has been chosen to define the locking tongue 2 which is intended to be fastened in the belt lock 5 in question, the system will thus determine that a correct locking of the locking tongue 2 has occurred.

Furthermore, the control unit 14 is connected to an indicator 15 via an additional connection 16. The indicator 15, is for example, a blinking light bulb or light emitting diode, or alternatively an acoustic signalling device which is activated if the identity code received from the transponder 9 does not correspond to the expected code, i.e. if the locking tongue 2 is positioned in the wrong belt lock. Preferably, the control unit 15 is also fed with information as to whether there is anybody sitting in the seat corresponding to the belt lock 5 in question. This information can be delivered to the control unit 14 by means of a presence sensor 17, for example in the form of an electrical contact which is arranged in the seat in question, and which is connected to the control unit 14 via a further connection 18. In this manner, the indicator 15 can be activated if somebody sits down in a vehicle seat without locking the correct locking tongue of the seat. This can be used to provide the driver of the vehicle with information as to whether the passengers of the vehicle are using the safety belt in a correct manner. In this way, it can also be detected if, for example, the locking tongue for the safety belt of the forward passenger seat is locked in the belt lock of the driver's seat.

To the control unit 14 there is preferably connected a safety device in the form of an airbag 19, which preferably is of a conventional kind, and which comprises a (not shown) activating means which is connected to the control unit 14 via a connection 20. The airbag can, in a manner which as such is known, be activated if a collision-like state is detected. This is done in a previously known manner, by means of a (not shown) acceleration sensor. Using the present invention, the function of the airbag 19 can also be controlled depending on whether somebody sitting in the seat at which the airbag 19 is arranged is using the safety belt or not. If, for example, the person is not using the safety belt, a higher pressure is needed, as well as a higher energy absorption of the airbag when it is activated, relative to the case when the person is using his safety belt. In an alternative embodiment the airbag 19 can be a two-step airbag, i.e. an airbag in which a first step is inflated if the person is wearing a safety belt, and both steps are inflated if the person is not wearing a safety belt.

Additionally, the control unit 14 is preferably also connected to a belt tightening device 21 via an additional connection 22. The belt tightener 21 is, as such, a known design which, in similarity to the airbag 19, will be activated when a collision-like state is detected. In such a situation, the tightener 21 is arranged to tighten the safety belt so that it is tightened about the torso of the person. In a known manner this provides a safer function of the safety belt, with a reduced risk of injuries to the person. Since there is no reason to activate the belt tightening device 21 if the corresponding seat belt is not in use, the control unit 14 is arranged to only permit activation of the tightener 21 if the proper locking tongue 2 has been locked into its corresponding belt lock 5. As has been explained above, this state can be determined using the identity code received from the transponder 19 and the signal from the presence sensor 17.

The control unit 14 can thus determine, using information from the answering signal of the transponder 9, whether one of three possible states is present, i.e. if the locking tongue 2 is fastened in the proper belt lock 5, if the locking tongue 2 is fastened in the wrong belt lock, or if the locking tongue 2 is not fastened at all. Starting from the state which is present at a certain moment, the control unit 14 can control various protective devices, for example an airbag 19 or a belt tightener 21, so that optimal protection for the person can be achieved.

Although Fig. 2 only shows one transponder 9 and one transmitting and receiving unit 10, a control unit 14 in a vehicle can also be connected to several transmitting and receiving units which are arranged in each belt lock of the vehicle and interact with transponders in corresponding locking tongues.

The invention is not limited to the example of an embodiment described above and shown in the drawings, but can be varied within the scope of the appended claims. The invention can advantageously be used in connection with controlling safety devices, for example airbags. This is however not necessary, since the invention can also be utilized if only indication by means of the indicator 15 is desired. Furthermore, it is not necessary to utilize a separate control unit 14; each transmitting and receiving unit 10 can be connected directly to activation organs in for example an airbag, so that the latter can be activated depending on whether the person is using the safety belt or not. Also, the invention can be utilized for the control of, for example, an airbag without any indication by means of an indicator taking place.

In a possible version of the invention, the belt lock can comprise a transponder, while the locking tongue comprises a transmitting and receiving unit, which can be the case if the belt lock is attached to the belt band, and the locking tongue is fixedly arranged in the vehicle.

The comparison as to whether the code which has been transferred from the transponder corresponds to the belt lock in question is, in the above embodiment, made in the control unit 14. In a version of the invention, the transponder itself can be shaped with a logic circuit which detects whether the identity of the transponder corresponds to the belt lock, in which the locking tongue is fastened. In that case, the transponder can generate a verification signal, which is transmitted to the control unit 14 only if the locking tongue 2 is fastened in the "proper" belt lock.

Finally the invention can be utilized in various kinds of vehicles, for example passenger cars, trucks and buses.

## Claims

1. A seat belt assembly for a vehicle least, comprising a first and second locking organ (2, 5), and means (9, 10, 14) for detecting whether the first locking organ (2) is fixed in the second locking organ (5) arranged for detachable fixing at the first locking organ (2), where said means (9, 10, 14) comprise transmitting organs (10a) for the transmission of a signal, and a transponder (9) arranged for the reception of said signal **characterized in that,** said transponder (9) is arranged for the transmission of an answering signal comprising an identity code which corresponds to said seat that said means (9, 10, 14) comprise belt, and receiving organs (10b) for reception of said answering signal, with said transponder (9) being arranged in said first locking organ (2), and said transmission and receiving organs (10) being arranged in said second locking organ (5) or vice versa, andin that said means (9, 10, 14) are arranged to determine whether the first locking organ (2) is fixed in a predetermined second locking organ (5), which corresponds to the first locking organ (2) by comparing said identity code with a predetermined, expected code.

2. Device according to claim 1, comprising a sensor (17) for the detection of the presence of a person in said seat, and an indicator (15) for the indication of a state which corresponds to said first locking organ not being fixed in the corresponding second locking organ (5),
**characterized in that** said means (9, 10, 14) comprise a control unit (14) for determining whether information received in said answering signal directly corresponds to the identity of the corresponding second locking organ (5), and for the activation of said indicator (15) if that is not the case.

3. Device according to claim 1 or 2 comprising an airbag (19) for the protection of people in the vehicle,
**characterized in that** the function of the airbag (19) is controlled depending on information received in the answering signal from the transponder (9).

4. Device according to claim 3,
**characterized in that** the airbag (19) is arranged to be activated with lower energy absorption when said first locking organ (2) is fixed in the corresponding second locking organ than when this is not the case.

5. Device according to any of the previous claims, comprising a safety belt tightener (21) for the tightening of the safety belt in case of a collision-like state,
**characterized in that** the function of the tightening device (21) is controlled depending on information received in the answering signal from the transponder (9).

6. Device according to claim 5,
**characterized in that** the safety belt tightening device (21) is arranged to be deactivated when detecting that said first locking organ (2) is not fixed to the corresponding second locking organ (5).

7. Device according to any of the previous claims,
**characterized in that** said first locking organ (2) consists of a locking tongue (2) arranged at a belt band (1) of the seat belt, and **in that** said second locking organ (5) consists of a belt lock (5) which is fixedly attached to the vehicle.

8. Method for detecting whether a person in a vehicle is using a safety belt, comprising the detection of whether a first locking organ (2) of the safety belt is fixed in a predetermined second locking organ (5), and the transmission of a first signal from transmitting organs (10a) arranged in said second locking organ (2) to a transponder (9) arranged in said first locking organ (2),
**characterized in that** it comprises the following steps:
transmitting an answering signal from the transponder (9) upon reception of said first signal, which answering signal comprises an identity code which corresponds to said seat belt,
the detection of said answering signal by means of reception organs (10b) arranged in said second locking organ (5), and
determining whether the received identity information directly corresponds to the identity of said second locking organ (5) by comparing said identity code with a predetermined, expected code.

9. Method according to claim 8,
**characterized in that** it comprises:
detection of the presence of a person in a seat at which said safety belt is arranged, and
indication of a state which corresponds to a person sitting in said seat and to the received identity information not corresponding to the identity of said second locking organ (5).

10. Method according to claim 8 or 9,
**characterized in that** it further comprises the control of the function of an airbag (19) depending on whether the received identity information corresponds to the identity of said second locking organ (5) or not.

11. Method according to any of claims 8-10,
**characterized in that** it further comprises the control of a seat belt tightening device (21) depending on whether the received identity information corresponds to the identity of said second locking organ (5) or not, with the tightening device (21) being deactivated if the received identity information does not correspond to the identity of said second locking organ (5).

## Patentansprüche

1. Sitzgurtaufbau für einen Fahrzeugsitz mit einer ersten und zweiten Verriegelungseinrichtung (2, 5) und einer Einrichtung (9, 10, 14) zum Erfassen, ob die erste Verriegelungseinrichtung (2) in der zweiten Verriegelungseinrichtung (5) fixiert ist, die zum lösbaren Fixieren bei der ersten Verriegelungseinrichtung (2) angeordnet ist, wobei die Einrichtung (9, 10, 14) übertragende Einrichtungen (10a) für die Übertragung eines Signals und einen Transponder (9) aufweist, welcher zum Empfang des Signals vorgesehen ist, **dadurch gekennzeichnet, dass** der Transponder (9) für die Übertragung eines Antwortsignals vorgesehen ist, welches einen Identitätscode aufweist, der mit dem Sitzgurt übereinstimmt, und dass die Einrichtung (10, 14) eine empfangende Einrichtung (10b) zum Empfangen des Antwortsignals aufweist, wobei der Transponder (9) in der ersten Verriegelungseinrichtung (2) angeordnet ist und die Übertragungs- und Empfangseinrichtung (10) in der zweiten Verriegelungseinrichtung (5) oder umgekehrt angeordnet ist, und dass die Einrichtung (9, 10, 14) für das Bestimmen durch Vergleichen der Identitätscodes mit einem vorbestimmten erwarteten Code vorgesehen ist, ob die erste Verriegelungseinrichtung (2) in einer vorbestimmten zweiten Verriegelungseinrichtung (5) fixiert ist, welche der ersten Verriegelungseinrichtung (2) entspricht.

2. Vorrichtung nach Anspruch 1, zusätzlich mit einem Sensor (17) zum Erfassen der Gegenwart einer Person in dem Sitz und einem Anzeiger (15) zum Anzeigen eines Zustands, welcher dem entspricht, dass die erste Verriegelungseinrichtung nicht in der entsprechenden zweiten Verriegelungseinrichtung (5) fixiert ist, **dadurch gekennzeichnet, dass** die Einrichtung (9, 10, 14) eine Steuereinheit (14) zum Bestimmen, ob in dem Antwortsignal empfangene Informationen direkt der Identität der entsprechenden zweiten Verriegelungseinrichtung (5) entspricht, und zum Aktivieren des Anzeigers (15) aufweist, wenn das nicht der Fall ist.

3. Vorrichtung nach Anspruch 1 oder 2 zusätzlich mit einem Airbag (19) zum Schutz der Personen in dem Fahrzeug, **dadurch gekennzeichnet; dass** die Funktion des Airbags (19) in Abhängigkeit von Informationen steuerbar ist, welche in dem Antwortsignal von dem Transponder (9) empfarigbar sind.

4. Vorrichtung nach Anspruch 3, **dadurch gekennzeichnet, dass** der Airbag (19) mit niedrigerer Energieabsorption aktivierbar ist, wenn die erste Verriegelungseinrichtung (2) in der entsprechenden zweiten Verriegelungseinrichtung fixiert ist, als wenn dies nicht der Fall ist.

5. Vorrichtung nach einem der vorangehenden Ansprüche, zusätzlich mit einem Sicherheitsgurtstrammer (21) zum Straffen des Sicherheitsgurts im Falle eines kollisionsähnlichen Zustands, **dadurch gekennzeichnet, dass** die Funktion der Strammereinrichtung (21) in Abhängigkeit von Informationen steuerbar ist, welche in dem Antwortsignal von dem Transponder (9) empfangbar sind.

6. Vorrichtung nach Anspruch 5, **dadurch gekennzeichnet, dass** die Sicherheitsgurtstrammereinrichtung (21) deaktiviert ist, wenn erfasst ist, dass die erste Verriegelungseinrichtung (2) nicht mit der entsprechenden zweiten Verriegelungseinrichtung (5) fixiert ist.

7. Vorrichtung nach einem der vorangehenden Ansprüche, **dadurch gekennzeichnet, dass** die erste Verriegelungseinrichtung (2) aus einer Verriegelungszunge (2) besteht, welche bei einem Gurtband (1) des Sitzgurts angeordnet ist, und dass die zweite Verriegelungseinrichtung (5) aus einem Gurtschloss (5) besteht, welches fest an dem Fahrzeug angebracht ist.

8. Verfahren zum Erfassen, ob eine Person in einem Fahrzeug einen Sicherheitsgurt benutzt, mit den Schritten:
Erfassen, ob eine erste Verriegelungseinrichtung (2) des Sicherheitsgurts in einer vorbestimmten zweiten Verriegelungseinrichtung (5) befestigt ist, und Übertragen eines ersten Signals von einer übertragenden Einrichtung (10a), welche in der zweiten Verriegelungseinrichtung (2) angeordnet ist, zu einem Transponder (9), welcher in der ersten Verriegelungseinrichtung (2) angeordnet ist, **gekennzeichnet durch** nachfolgende Schritte:
Übertragen eines Antwortsignals von dem Transponder (9) auf den Empfang des ersten Signals hin, wobei das Antwortsignal einen Identitätscode aufweist, welcher dem Sitzgurt entspricht,
Erfassen des Antwortsignals **durch** eine Empfangseinrichtung (10b), welche in der zweiten Verriegelungseinrichtung (5) angeordnet ist, und
Bestimmen **durch** Vergleichen des Identitätscodes mit einem vorbestimmten erwarteten Code, ob die empfangenen Identitätsinformationen direkt der Identität der zweiten Verriegelungseinrichtung (5) entsprechen.

9. Verfahren nach Anspruch 8, **gekennzeichnet durch** die Schritte:
Erfassen der Gegenwart einer Person in einem Sitz, an welchem der Sicherheitsgurt angeordnet ist, und
Anzeigen eines Zustands, welcher einer Person, welche in dem Sitz sitzt, und der empfangenen Identitätsinformation entspricht, welche nicht der Identität der zweiten Verriegelungseinrichtung (5) entspricht.

10. Verfahren nach einem der Ansprüche 8 oder 9, weiterhin **gekennzeichnet durch** Steuern der Funktion eines. Airbags (19) in Abhängigkeit davon, ob die empfangene Identitätsinformation der Identität der zweiten Verriegelungseinrichtung (5) entspricht oder nicht.

11. Verfahren nach einem der Ansprüche 8 bis 10, weiterhing **gekennzeichnet durch** Steuern einer Sitzgurtstrammereinrichtung (21) in Abhängigkeit davon, ob die empfangene Identitätsinformation der Identität der zweiten Verriegelungseinrichtung entspricht oder nicht, mit einer Strammereinrichtung (21), welche deaktiviert wird, wenn die empfangene Identitätsinformation nicht der Identität der zweiten Verriegelungseinrichtung (5) entspricht.

## Revendications

1. Assemblage pour ceinture de sécurité destiné à un siège de véhicule, comprenant des premier et second organes de verrouillage (2, 5), et des moyens (9, 10, 14) pour détecter si le premier organe de verrouillage (2) est fixé dans le second organe de verrouillage (5) agencé en vue dune fixation pouvant être détachée au niveau du premier organe de verrouillage (2), où lesdits moyens (9, 10, 14) comprennent des organes de transmission (10a) pour la transmission d'un signal, et un transpondeur (9) agencé pour la réception dudit signal, **caractérisé en ce que** ledit transpondeur (9) est agencé pour la transmission d'un signal de réponse comprenant un code d'identité qui correspond à ladite ceinture de sécurité, et **en ce que** lesdits moyens (9, 10, 14) comprennent des organes de réception (10b) pour la réception dudit signal de réponse, ledit transpondeur (9) étant agencé dans ledit premier organe de verrouillage (2), et lesdits organes de transmission et de réception (10) étant agencés dans ledit second organe de verrouillage (5) ou inversement, et **en ce que** lesdits moyens (9, 10, 14) sont agencés de manière à déterminer si le premier organe de verrouillage (2) est fixé dans un second organe de verrouillage prédéterminé (5), qui correspond au premier organe de verrouillage (2) en comparant ledit code d'identité avec un code attendu prédéterminé.

2. Dispositif selon la revendication 1, comprenant un capteur (17) pour la détection de la présence dune personne dans ledit siège, et un indicateur (15) pour l'indication d'un état qui correspond à l'absence de fixation dudit premier organe de verrouillage dans le second organe de verrouillage correspondant (5),
**caractérisé en ce que** lesdits moyens (9, 10, 14) comprennent une unité de commande (14) pour déterminer si des informations reçues dans ledit signal de réponse correspondent directement à l'identité du second organe de verrouillage correspondant (5), et pour l'activation dudit indicateur (15), si ce n'est pas le cas.

3. Dispositif selon la revendication 1 ou 2, comprenant un airbag (19) pour la protection de personnes dans le véhicule,
**caractérisé en ce que** le fonctionnement de l'airbag (19) est commandé en fonction d'informations reçues dans le signal de réponse provenant du transpondeur (9).

4. Dispositif selon la revendication 3,
**caractérisé en ce que** l'airbag (19) est agencé de manière à être activé avec une absorption d'énergie, lorsque ledit premier organe de verrouillage (2) est fixé dans le second organe de verrouillage correspondant, d'un niveau inférieur à celui existant lorsque ce n'est pas le cas.

5. Dispositif selon l'une quelconque des revendications précédentes, comprenant un tendeur de ceinture de sécurité (21) pour le serrage de la ceinture de sécurité en cas d'état similaire à une collision, **caractérisé en ce que** le fonctionnement du dispositif de serrage (21) est commandé en fonction d'informations reçues dans le signal de réponse provenant du transpondeur (9).

6. Dispositif selon la revendication 5, **caractérisé en ce que** le dispositif de serrage de ceinture de sécurité (21) est agencé de manière à être désactivé lorsque l'on détecte que ledit premier organe de verrouillage (2) n'est pas fixé au second organe de verrouillage correspondant (5).

7. Dispositif selon l'une quelconque des revendications précédentes, **caractérisé en ce que** ledit premier organe de verrouillage (2) est constitué d'une languette de verrouillage (2) agencée au niveau d'une bande de ceinture (1) de la ceinture de sécurité, et **en ce que** ledit second organe de verrouillage (5) est constitué d'un verrou de ceinture (5) qui est lié de manière fixe au véhicule.

8. Procédé pour détecter si une personne dans un véhicule utilise une ceinture de sécurité, comprenant la détection du fait qu'un premier organe de verrouillage (2) de la ceinture de sécurité est fixé dans un second organe de verrouillage prédéterminé (5), et la transmission d'un premier signal provenant d'organes de transmission (10a) agencés dans ledit second organe de verrouillage (2) à un transpondeur (9) agencé dans ledit premier organe de verrouillage (2),
**caractérisé en ce qu'**il comprend les étapes suivantes consistant à :
transmettre un signal de réponse provenant du transpondeur (9) lors de la réception dudit premier signal, lequel signal de réponse comprend un code d'identité qui correspond à ladite ceinture de sécurité,
détecter ledit signal de réponse au moyen d'organes de réception (10b) agencés dans ledit second organe de verrouillage (5), et
déterminer si les informations d'identité reçues correspondent directement à l'identité dudit second organe de verrouillage (5) en comparant ledit code d'identité avec un code attendu prédéterminé.

9. Procédé selon la revendication 8, **caractérisé en ce qu'**il comprend :
la détection de la présence dune personne dans un siège sur lequel ladite ceinture de sécurité est agencée, et
l'indication d'un état qui correspond à une personne assise dans ledit siège et à l'absence de correspondance entre les informations d'identité reçues et l'identité dudit second organe de verrouillage (5).

10. Procédé selon la revendication 8 ou 9, **caractérisé en ce qu'**il comprend en outre la commande du fonctionnement d'un airbag (19) en fonction de la correspondance ou non des informations d'identité reçues à l'identité dudit second organe de verrouillage (5).

11. Procédé selon l'une quelconque des revendications 8 à 10, **caractérisé en ce qu'**il comprend en outre la commande d'un dispositif de serrage de ceinture de sécurité (21) en fonction de la correspondance ou non des informations d'identité reçues à l'identité dudit second organe de verrouillage (5), le dispositif de serrage (21) étant désactivé si les informations d'identité reçues ne correspondent pas à l'identité dudit second organe de verrouillage (5).
